# EUROPEAN PATENT SPECIFICATION

(11) **EP 1 992 530 B1**
(45) Date of publication and mention of the grant of the patent: **20.06.2012**
(21) Application number: 08156319.9
(22) Date of filing: 15.05.2008
(51) Int. Cl.: B60R 22/34

(54) **Cover structure of seat belt retractor**
Abdeckstruktur für einen Sitzgurteinzug
Structure de couverture de rétracteur de ceinture de sécurité

(30) Priority: 16.05.2007 KR 20070047755
(43) Date of publication of application: 19.11.2008
(73) Proprietor: Autoliv Development AB, 447 83 Vårgårda (SE)
(72) Inventor: Choi, In-Su, Gyeonggi-do 486-833 (KR); Lee, Jung-Min, Seoul 131-824 (KR); Lee, Byung-Jin, Daegu 704-400 (KR); Lee, Dong-Sub, Wonju_Si, Kangwon_Do (KR); Bai, Sang-Hong, Gangwon-do 220-801 (KR); Bae, Gi-Young, Gangwon-do 220-100 (KR); Kim, Jong-Kag, Gangwon-do 220-100 (KR); Kim, Do-Sik, Seoul 151-010 (KR)
(74) Representative: Becker, Thomas

(56) References cited:
- JP-A- 05 193 441
- JP-A- 2003 212 086
- US-A- 5 921 496
- US-B1- 6 283 398

## Description

### BACKGROUND OF THE INVENTION

### Field of the invention

The present invention relates to a cover structure of a seat belt retractor, and more particularly, to a cover structure of a seat belt retractor coupled to a mechanism cover to prevent a webbing wound on a seat belt retractor from being released depending on a vehicle angle or a vehicle inclination. Such cover structure is described in JP 2003-212086 A.

### Description of the Prior Art

A seat belt or an airbag is installed in a vehicle to safely protect a driver and a passenger from traffic accidents.

Such a seat belt is a basic safety device installed to operate upon vehicle accidents such as front collision, side collision, roll, and so on, to thereby maximally protect a driver and a passenger.

A widely used seat belt is a three-point safety belt constituted of a waist belt for protecting the waist of the passenger (hereinafter, including "driver"), and a shoulder belt for protecting the shoulder and the breast. A guide pulley is coupled with the shoulder belt, a retractor is installed at a center pillar of a vehicle to release or wind the belt, and the waist belt is fastened to a locker panel.

In addition, a tongue is inserted in a mid-portion of the belt, and the tongue can be locked to or released from a buckle fixed to a floor of the vehicle.

Further, the retractor for winding or releasing the seat belt is classified into a non-locking retractor (NLR), an emergency locking retractor (ELR), and a web locking retractor (WLR).

The non-locking retractor is locked after adjusting lengths of the shoulder belt and the waist belt. On the other hand, in the emergency locking retractor, the belt is freely retracted and rewound during stoppage or movement of the vehicle, and the belt is locked only when a vehicle collision causing abrupt deceleration occurs or when the belt is rapidly extracted.

In addition, in the web locking retractor, a clamp directly grips the belt upon vehicle collision to stop extraction of the belt, thereby preventing serious injury to the passenger due to abrupt forward movement of the passenger.

Meanwhile, Japanese Patent Laid-open Publication No. H04-314650 discloses a "Seat Belt Retractor", which will be briefly described below.

The seat belt retractor includes a reel shaft for winding a seat belt, a frame for rotatably supporting the reel shaft, and a lock means installed between the frame and the reel shaft to allow normal rotation of the reel shaft and stop rotation of the reel shaft depending on necessity in at least an extraction direction of the seat belt.

In addition, the seat belt retractor includes a speed reduction detection means operated depending on speed reduction of a vehicle more than a predetermined value, and a lock operation means for operating the lock means depending on operation of the speed reduction detection means.

The lock means includes a lock pin supported by the reel shaft, and a coupling part installed at the frame to be coupled with the lock pin. The lock pin is normally installed at a non-coupling position separated from a non-coupling part of the frame and installed at a coupling position of the coupling part of the frame when the lock operation means is operated. As a result, the lock pin stops rotation of the reel shaft, installed at the coupling position, in at least an extraction direction of the seat belt.

In addition, Japanese Patent Laid-open Publication No. H05-193441 discloses a "Seat Belt Retractor", which will be briefly described below.

The seat belt retractor includes a reel shaft for winding a webbing, a frame for rotatably supporting both ends of the reel shaft, and a lock means installed between the frame and the reel shaft to allow normal rotation of the reel shaft and stop rotation of the reel shaft depending on necessity in at least an extraction direction of the webbing.

In addition, the seat belt retractor includes a speed reduction detection means operated depending on speed reduction of a vehicle more than a predetermined value, and a lock operation means for operating the lock means depending on operation of the speed reduction detection means.

The lock means is supported by a first coupling member installed at one electrode of the reel shaft of the frame, any one side of the first coupling part, and one end of the reel shaft, and supported by the first coupling member coupled to any one side of the first coupling part, a second coupling member coupled to the other side of the first coupling part and installed at the other end of the reel shaft of the frame, any one side of the second coupling part, and an outer end of the reel shaft.

In addition, the lock operation means includes a lock adjustment means having the other side of the second coupling member and the second coupling part that can be coupled to any one side of the second coupling member and the second coupling part, setting a state that can couple any one side of the first coupling member and the first coupling part to the other side of the first coupling member and the first coupling part, setting a state that can couple any one side of the second coupling member and the second coupling part to the other side of the second coupling member and the second coupling part, and then, performing coupling between the first coupling part and the first coupling member and coupling between the second coupling part and the second coupling member.

Meanwhile, Japanese Patent Laid-open Publication No. 2003-212085 discloses a "Seat Belt Retractor", which will be briefly described below.

The seat belt retractor includes an emergency lock mechanism for stopping rotation of a webbing in an extraction direction, and first and second lock start mechanisms for operating the emergency lock mechanism.

The second lock start mechanism includes a cover body covering the first and second lock start mechanisms, coupled to side plates, disposed inside a ratchet wheel, and having a coupling inner periphery wall having inner periphery teeth projecting therefrom. The cover body is rotatably supported by a lock clutch body, and simultaneously delaying abrupt rotation of the lock clutch body meshed with the internal teeth.

In addition, the lock clutch body includes a lock arm for locking rotation of the body, and the cover body includes an inner periphery wall support part having a radial periphery part directing to the side plates and projecting therefrom.

Meanwhile, Japanese Patent Laid-open Publication No. 2003-212086 discloses "Safety Belt Retractor," which forms the closest state of art and will be described in brief.

Such a safety belt retractor includes an emergency lock start device for starting a lock mechanism reacting to rapid variation in acceleration of a vehicle and stopping extraction of a webbing. The emergency lock start device includes a box-shaped holder having a concave part formed at its bottom surface, an inertia mass disposed in the concave part of the holder and swinging in response to an acceleration larger man a predetermined value, and a sensor lever for rotatably supporting a shaft part installed at one end thereof in the holder and starting the lock mechanism rotated around an axial center of the shaft part depending on swing of the inertial mass. A guide groove is formed at an outer periphery of the shaft part of the sensor lever, and a rotation restriction projection projects from the outer periphery to be inserted into the guide groove of the holder and restricts a rotation range of the sensor lever.

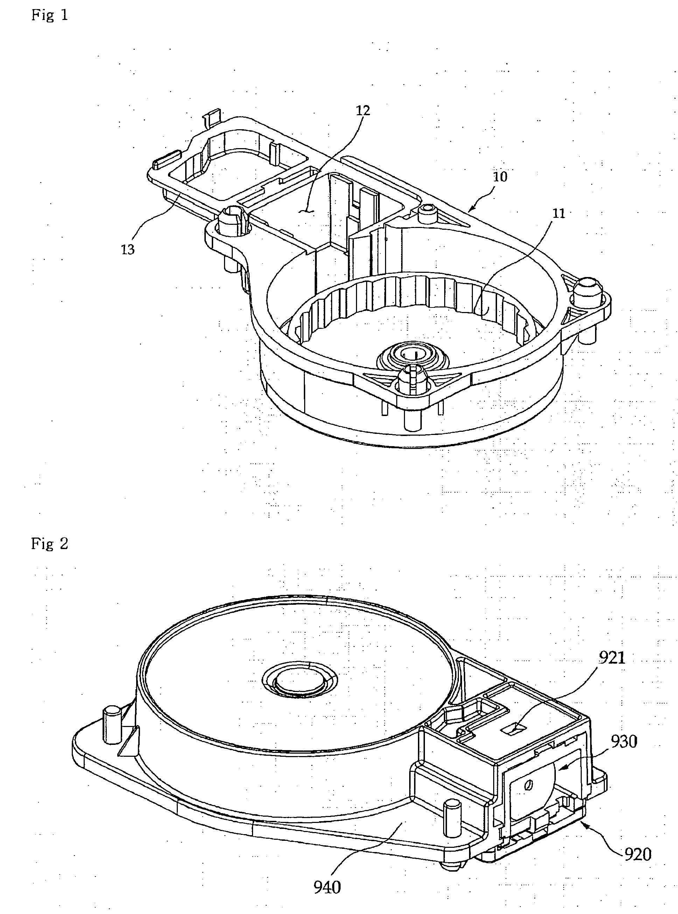

FIG. 1 illustrates a mechanism cover as a cover structure coupled to a seat belt retractor, which will be briefly described below.

As shown in. FIG. 1, a mechanism cover 10 has a ratchet 11 formed at a cylindrical inner periphery thereof to mesh with a locking member 700 depending on necessity. An accommodating part 12 is formed under the ratchet 11 to accommodate a vehicle sensor. The accommodating part 12 extends toward one side thereof to form a cover 13 for opening and closing the accommodating part 12.

The seat belt retractor includes the vehicle sensor installed therein to be operated depending on an angle or a slope of the retractor. The vehicle sensor is inserted into the accommodating part formed under the mechanism cover structure and covered by the cover extending from one side thereof, thereby completing assembly of the vehicle sensor.

Since the sensor insert operation and the covering operation are separately performed, the assembly of the vehicle sensor is time-consuming.

### SUMMARY OF THE INVENTION

An object of the invention provides that the accommodating part has a lower opening formed in a lower surface thereof to accommodate the vehicle sensor therein, the vehicle sensor being received into the accommodating part through the lower opening in a direction perpendicular with respect to the central axis, the accommodating part has a fixing hole formed in side surfaces thereof, the vehicle sensor has a fixing projection projecting from its outer surface and coupled to the fixing hole, and the vehicle sensor is inserted into the accommodating part and coupled thereto.

In addition, the accommodating part may have a guide groove formed in an inner surface thereof and extending from the fixing hole to the lower opening thereof, and the accommodating part also having a guide projecting inward from the inner surface generally adjacent to the guide groove.

Further, the accommodating part may have a threshold projecting inward from an inner part thereof.

Furthermore, an extension part may be formed between and interconnects a side of the mechanism cover and one side of the accommodating part.

### BRIEF DESCRIPTION OF THE DRAWINGS

The above and other objects, features and advantages of the present invention will be more apparent from the following detailed description taken in conjunction with the accompanying drawings, in which:
- FIG. 1: is a perspective view of a conventional seat belt retractor;
- FIG. 2: is a perspective view of a cover structure of a seat belt retractor in accordance with an exemplary embodiment of the present invention;
- FIG. 3: is an exploded perspective view of the cover structure of a seat belt retractor in accordance with an exemplary embodiment of the present invention; and
- FIG. 4: is an exploded perspective view of a coupling structure between a cover structure and a locking member of a seat belt retractor in accordance with an exemplary embodiment of the present invention.

### DETAILED DESCRIPTION OF EXEMPLARY EMBODIMENTS

Hereinafter, exemplary embodiments of the present invention will be described with reference to the accompanying drawings.

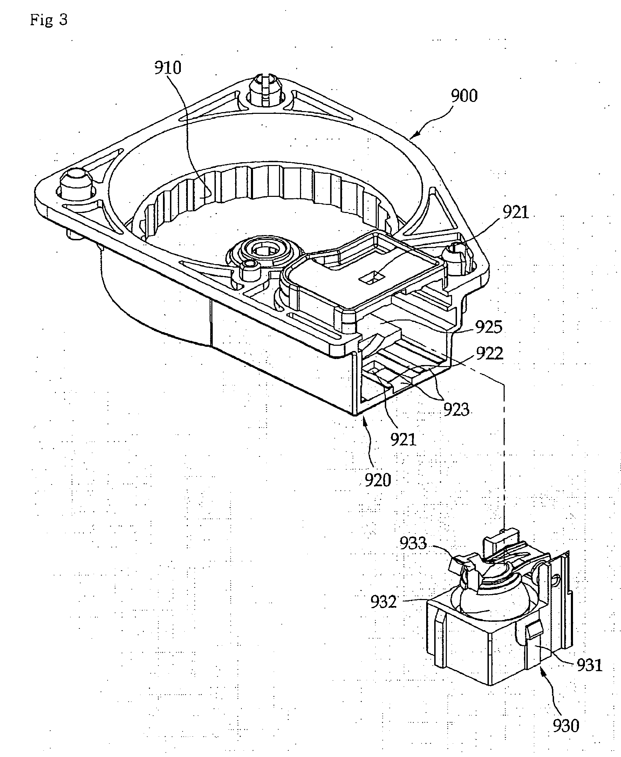

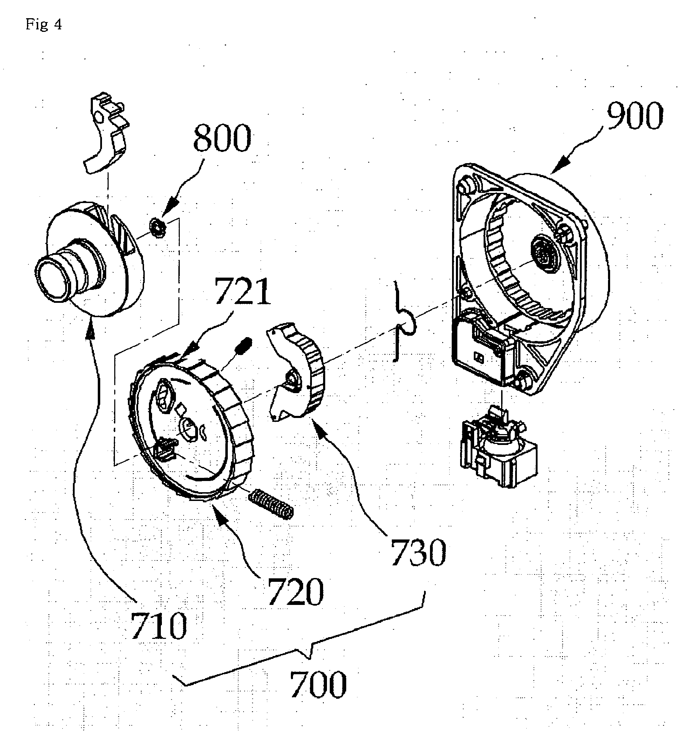

FIG. 2 is a perspective view of a cover structure of a seat belt retractor in accordance with an exemplary embodiment of the present invention, FIG. 3 is an exploded perspective view of the cover structure of a seat belt retractor in accordance with an exemplary embodiment of the present invention, and FIG. 4 is an exploded perspective view of a coupling structure between a cover structure and a locking member of a seat belt retractor in accordance with an exemplary embodiment of the present invention.

As shown in FIGS. 2 to 4, the cover structure in accordance with the present invention includes a mechanism cover 900 coupled to one side surface of a locking member 700, and a vehicle sensor 930 accommodated under the mechanism cover 900. The locking member 700 includes a locking base 710 for stopping operation of the seat belt retractor, a locking clutch 720, and a locker arm 730.

As shown in FIG. 3, the mechanism cover 900 includes a cylindrical part having a predetermined diameter and provided with one upper opened surface, and a latch 910 having a smaller diameter than the cylindrical part is formed from a closed surface at the other surface. An accommodating part 920 is formed at a lower outer surface of the cylindrical part.

The mechanism cover 900 is installed at a position opposite to the locking member 700 installed at one side of the seat belt retractor. The locking member 700 is coupled to the interior thereof, i.e., the opening of the cylindrical part to be smoothly rotated when the webbing is naturally wound or released.

In addition, the locking member 700 includes the locking base 710 fixedly inserted into the guide drum on which the webbing is wound, the locking clutch 720 coupled to one surface of the locking base 710 to be rotated to a predetermined angle, and the locker arm 730 coupled to one side of the locking clutch 720.

The locking member 700 is normally rotated with the webbing and the guide drum. Since the locking base 710 has a pawl coupled thereto and rotated by its rotation inertia, it is possible to prevent the webbing from being released or rewound by hooking the pawl to the latch depending on operation of the pawl on vehicle impact.

In addition, the accommodating part 920 has a substantially hexagonal shape and includes a vehicle sensor 930 therein. As shown in FIG. 3, the accommodating part 920 has one opened surface, and upper and lower surfaces having fixing holes 921 opposite to each other. The fixing holes 921 may have a polygonal shape such as rectangular, pentagonal, hexagonal shapes, or other shapes, without any limitation.

Further, the accommodating part 920 has a guide 922 formed at one surface thereof and vertically projecting from the opened lower surface, and a guide groove 923 formed between the guide 922 and the inner surface.

Furthermore, an extension part 940 is formed at an outer side of the accommodating part 920. The extension part 940 extends integrally with the mechanism cover 900 and the accommodating part 920 to maintain strength thereof, thereby preventing the accommodating part 920 from being bent or deformed.

The vehicle sensor 930 has a semi-spherical groove, and a fixing projection 931 projecting from an outer surface of the vehicle sensor 930, i.e., a position corresponding to the fixing hole 921. The fixing projection 931 has the same shape as the fixing hole 921 and corresponding to the guide groove 923 to facilitate assembly of the vehicle sensor 930.

In addition, a spherical ball 932 is disposed in the semi-spherical groove, and a hooking member 933 is formed over the vehicle sensor 930 to be operated depending on movement of the ball 932.

The hooking member 933 vertically or horizontally moves depending on movement of the ball 932 to be hooked by a latch 721 formed at an outer periphery of the locking clutch 720 of the locking member 700.

Meanwhile, as shown in FIG. 3, a threshold 925 is formed in the accommodating part 920 to project inward from the accommodating part 920. The threshold 925 may cause the vehicle sensor 930 to maintain a height lower than a lower surface of the accommodating part 920 with the threshold 925 being in contact with an upper surface of the vehicle sensor 930.

The threshold 925 drives the hooking part 933 projecting upward to be smoothly slid and inserted into the mechanism cover 900, when the vehicle sensor 930 is inserted.

If the threshold 925 does not exist, since the hooking member 933 is not assembled in place, the hooking member 933, operated by movement of the ball 932, may be operated even when the hooking member 933 should not be operated, thereby making it impossible to release or rewind the webbing.

The cover structure in accordance with the present invention is assembled as follows. First, an operator grips the mechanism cover 900 with his/her one hand, grips the vehicle sensor 930 with the other hand, and disposes the fixing hole 921 and the fixing projection 931 in the same direction.

In this state, as shown in FIG. 3, the operator pushes the vehicle sensor 930 into the accommodating part 920 such that the fixing projection 931 of the vehicle sensor 930 can be slid along the guide 922 and the guide groove 923 and inserted into the fixing hole 921.

That is, in a state shown in FIG. 4, the operator simply pushes the vehicle sensor 930 into the accommodating part 920 to complete assembly thereof.

Since the fixing projection 931 is fixedly inserted into the fixing hole 921, the assembled vehicle sensor 930 can stably maintain the assembled state without separation, even though a lower surface of the accommodating part 920 is opened.

In addition, since the accommodating part 920 and the mechanism cover 900 are integrally formed with each other by the extension part 940, it is possible to prevent the accommodating part 920 from being deformed.

As can be seen from the foregoing, since a vehicle sensor can be very conveniently and readily assembled to a mechanism cover, it is possible to reduce assembly time and increase productivity.

In addition, since an accommodating part is integrally formed with the mechanism cover with an extension part interposed therebetween, it is possible to prevent deformation of the accommodating part and increase durability, despite prolonged use.

## Claims

1. A cover structure of a seat belt retractor comprising a vehicle sensor (930), and a mechanism cover (900) having a cylindrical part defining a central axis and an accommodating part (920) for accommodating the vehicle sensor (930), **characterized in that** the accommodating part (920) has a lower opening formed in a lower surface thereof to accommodate the vehicle sensor (930) therein, the vehicle sensor (930) being received into the accommodating part (920) through the lower opening in a direction perpendicular with respect to the central axis, the accommodating part (920) has a fixing hole (921) formed in side surfaces thereof, the vehicle sensor (930) has a fixing projection (931) projecting from its outer surface and coupled to the fixing hole (921), and the vehicle sensor (930) is inserted into the accommodating part (920) and coupled thereto.

2. The cover structure of a seat belt retractor according to claim 1, **characterized** that the accommodating part (920) has a guide groove (923) formed in an inner surface thereof and extending from the fixing hole (921) to the lower opening thereof, and the accommodating part (920) also having a guide (922) projecting inward from the inner surface generally adjacent to the guide groove (923).

3. The cover structure of a seat belt retractor according to claim 2, **characterized in that** the accommodating part (920) has a threshold (925) projecting inward from an inner part of the accommodating part (920).

4. The cover structure of a seat belt retractor according to claim 1, **characterized** that an extension part (940) is formed between and interconnects a side of the mechanism cover (900) and one side of the accommodating part (920).

## Patentansprüche

1. Verkleidungsstruktur einer Sicherheitsgurt-Aufrollvorrichtung, die einen Fahrzeugsensor (930) und eine Mechanismusabdeckung (900), die einen zylindrischen Teil, der eine Mittelachse definiert, und einen Aufnahmeteil (920) zum Aufnehmen des Fahrzeugsensors (930) hat, umfasst, **dadurch gekennzeichnet, dass** der Aufnahmeteil (920) eine untere Öffnung hat, die in einer unteren Fläche desselben geformt ist, um den Fahrzeugsensor (930) darin aufzunehmen, wobei der Fahrzeugsensor (930) durch die untere Öffnung in einer senkrechten Richtung in Bezug auf die Mittelachse in dem Aufnahmeteil (920) aufgenommen ist, der Aufnahmeteil (920) ein Befestigungsloch (921) hat, das in Seitenflächen desselben geformt ist, der Fahrzeugsensor (930) einen Befestigungsvorsprung (931) hat, der von seiner Außenfläche aus vorspringt und an das Befestigungsloch (921) gekoppelt ist, und der Fahrzeugsensor (930) in den Aufnahmeteil (920) eingefügt und an denselben gekoppelt ist.

2. Verkleidungsstruktur einer Sicherheitsgurt-Aufrollvorrichtung nach Anspruch 1, **dadurch gekennzeichnet, dass** der Aufnahmeteil (920) eine Führungsnut (923) hat, die an einer Innenfläche desselben geformt ist und sich von dem Befestigungsloch (921) aus bis zu der unteren Öffnung desselben erstreckt, und der Aufnahmeteil (920) ebenfalls eine Führung (922) hat, die im Wesentlichen angrenzend an die Führungsnut (923) von der Innenfläche aus nach innen vorspringt.

3. Verkleidungsstruktur einer Sicherheitsgurt-Aufrollvorrichtung nach Anspruch 2, **dadurch gekennzeichnet, dass** der Aufnahmeteil (920) eine Schwelle (925) hat, die von einem inneren Teil des Aufnahmeteils (920) aus nach innen vorspringt.

4. Verkleidungsstruktur einer Sicherheitsgurt-Aufrollvorrichtung nach Anspruch 1, **dadurch gekennzeichnet, dass** ein Erweiterungsteil (940) zwischen einer Seite der Mechanismusabdeckung (900) und einer Seite des Aufnahmeteils (920) geformt ist und dieselben miteinander verbindet.

## Revendications

1. Structure de couverture d'un rétracteur de ceinture de sécurité comprenant un capteur de véhicule (930), et un couvercle de mécanisme (900) ayant une partie cylindrique définissant un axe central et une partie de logement (920) pour loger le capteur de véhicule (930), **caractérisée en ce que** la partie de logement (920) a une ouverture inférieure formée dans sa surface inférieure afin de loger le capteur de véhicule (930) à l'intérieur de cette dernière, le capteur de véhicule (930) étant reçu dans la partie de logement (920) à travers l'ouverture inférieure dans une direction perpendiculaire par rapport à l'axe central, la partie de logement (920) a un trou de fixation (921) formé dans ses surfaces latérales, le capteur de véhicule (930) a une saillie de fixation (931) faisant saillie de sa surface externe et couplée au trou de fixation (921), et le capteur de véhicule (930) est inséré dans la partie de logement (920) et couplé à cette dernière.

2. Structure de couverture d'un rétracteur de ceinture de sécurité selon la revendication 1, **caractérisée en ce que** la partie de logement (920) a une rainure de guidage (923) formée dans sa surface interne et s'étendant à partir du trou de fixation (921) jusqu'à son ouverture inférieure, et la partie de logement (920) a également un guide (922) faisant saillie vers l'intérieur à partir de la surface interne généralement adjacente à la rainure de guidage (923).

3. Structure de couverture d'un rétracteur de ceinture de sécurité selon la revendication 2, **caractérisée en ce que** la partie de logement (920) a un seuil (925) faisant saillie vers l'intérieur à partir d'une partie interne de la partie de logement (920).

4. Structure de couverture d'un rétracteur de ceinture de sécurité selon la revendication 1, **caractérisée en ce qu'**une partie d'extension (940) est formée entre et interconnecte un côté du couvercle de mécanisme (900) et un côté de la partie de logement (920).
